# EUROPEAN PATENT APPLICATION

(11) **EP 1 638 280 A2**
(43) Date of publication of application: **22.03.2006**
(21) Application number: 05020244.9
(22) Date of filing: 16.09.2005
(51) Int. Cl.: H04L 12/64

(54) **Home network system using IEEE 1394 and node configuration method thereof**

(30) Priority: 16.09.2004 KR 2004074153
(71) Applicant: Samsung Electronics Co., Ltd., Yeongtong-gu Suwon-si, Gyeonggi-do (KR)
(72) Inventor: Jung, Hee-Won Samsung Electronics Co., Ltd., Suwon-si Gyeonggi-do (KR)
(74) Representative: Grünecker, Kinkeldey, Stockmair & Schwanhäusser Anwaltssozietät

(57) **Abstract**

Disclosed is a home network system using an IEEE 1394 protocol and a node configuration method thereof that can circumvent a bus reset of the IEEE 1394 protocol that are currently causing data loss. The home network system includes a root node (41) operating as a home gateway of the home network and having a static node ID that performs a bus management function with respect to nodes of the home network system, and at least one node connected to the root node to form a tree structure. If a node addition/removal occurs in the home network system, a node ID of an added/removed node (45,46 or 47) is allocated from the root node through a bus reset between the added/removed node (45,46 or 47) and a node (respectively 42,43 or 44) physically connected to the added/removed node.

## Description

The present invention relates generally to a home network system using an IEEE 1394 protocol, and more particularly to an IEEE 1394 system designed to prevent undesirable effects of a bus reset of the current IEEE 1394 protocol.

The conventional IEEE 1394 technology relating to a serial bus interface standard is first proposed by Apple Computer Inc. and Texas Instruments Incorporated. The IEEE 1394 technology has been developed under a code name "FireWre", and in December 1995, it became standardized by the IEEE committee.

The IEEE 1394 protocol may be a standard bus interface for a network PC (Personal Computer) and a portable computer. However, in these days of high-performance multimedia, the existing extended bus or interface cannot properly accommodate the speed of other new technologies, thus hindering the progress. The bottleneck phenomenon between peripheral devices and the main body of a computer system has become a serious obstacle in the new computer system requiring faster speed.

In processing isochronous data (for example, AV stream data and so on) and asynchronous data (for example, control data, packet data, etc.), the IEEE 1394 protocol, which can connect 63 nodes at maximum as a serial bus interface, gives priority to the isochronous data, thus securing the QoS (Quality of Service) with respect to AV data used in a home network. Further, IEEE 1394a defines bitrates of S100, S200 and S400, and IEEE 1394b defines optical media such as POF, GOF, MMF, etc., in a cable environment, so that a high rate of 3.2Gbps is secured.

Since the IEEE 1394 protocol as described above takes charge of a bus management that is a software stack, and a configuration among IEEE 1394 nodes and a root node for the bus management is not specified, a bus reset of the whole IEEE 1394 system is performed and a new node is constructed whenever a new IEEE 1394 appliance device is removed or added.

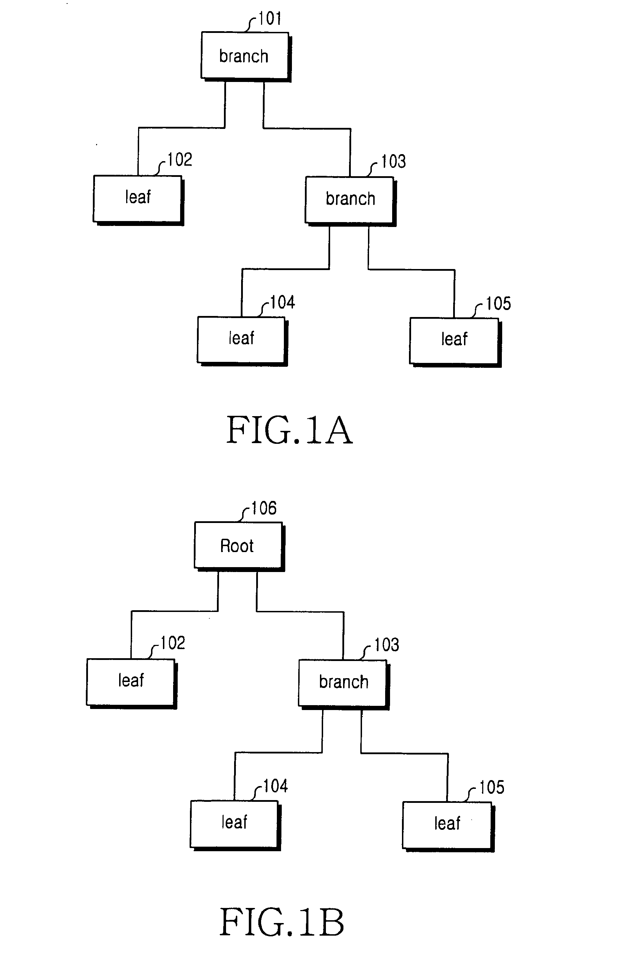

FIGs. 1a and 1b are views illustrating an example of a node configuration according to a conventional IEEE 1394 protocol.

In particular, FIGs. 1a and 1b exemplify a system having a topology of a tree structure according to the IEEE 1394 protocol. In this case, the IEEE 1394 topology before a node configuration, as illustrated in FIG. 1a, includes leaf nodes 102, 104 and 105 that are terminal nodes and branch nodes 101 and 103 that are nodes.

The IEEE 1394 topology after the node configuration, as illustrated in FIG. 1b, includes leaf nodes 102, 104 and 105 that are terminal nodes, a branch node 103 that is a node for connecting the nodes and a root node 106 selected from the branch nodes.

The root node 106 requires performing the bus management. The determined root node 106 is not static as in other network systems, but is newly determined according to the addition/removal of a node.

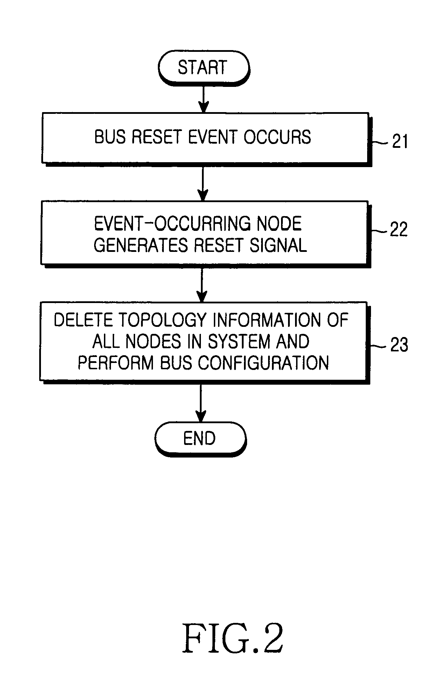

FIG. 2 is a flowchart illustrating the node configuration method according to the conventional IEEE 1394 system.

First, if a bus reset event in that a new node 105 is added to or the existing node 104 is removed from the basic tree structure of FIG. 1 a occurs (step 21), the node 103 at which the event occurs generates a reset signal by re-determining the status bit of a physical (PHY) register that is connected to a port connected to the node 103 according to the change of the status of the port (step 22).

Then, the generated reset signal is broadcast to all nodes in the IEEE 1394 system, so that it deletes topology information stored in PHY registers of the respective nodes and performs the bus configuration.

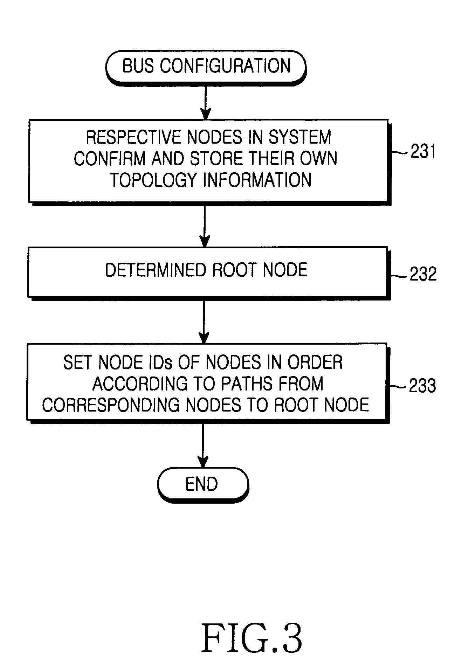

FIG. 3 is a detailed flowchart illustrating the bus configuration process of the node configuration method according to the conventional IEEE 1394 system.

Referring to FIG. 3, the respective node in the IEEE 1394 system, from which the topology information stored in the PHY register is deleted by the transferred reset signal, confirms the topology information that indicates whether or not the corresponding node is a terminal node (i.e., lead node or branch node), and stores the topology information in the PHY register of the respective node (step 231).

Then, a node, which is not the terminal node (i.e., which is the branch node) but can perform a bus management function, is determined as the root node (step 232). That is, a node that can perform the bus management function among branch nodes is voluntarily determined as the root node. For example, the branch node 101 of FIG. 1a becomes the root node 106 of FIG. 1b.

After a node tree is formed around the root node, a leaf node of a leaf node group having the smallest number of leaf nodes among existing leaf node groups (for example, the node 103 in FIG. 1b) that is connected to the root node is first allocated with a node ID #0, and then other remaining leaf nodes of the group are allocated with node IDs in order according to paths from the corresponding nodes to the root node. Additionally, a leaf node of another leaf node group having the next smallest number of leaf nodes among the existing leaf node groups (for example, the node 104 or 105 in FIG. 1b) that is connected to the root node is allocated with the next node ID, and then other remaining leaf nodes of the group are allocated with node IDs in order according to paths from the corresponding nodes to the root node, respectively. Through the above-described process of giving the node IDs, all the nodes in the system are provided with the node IDs, and the root node is finally provided with a node ID having the largest number among the node IDs (step 233).

As described above, in the case in which a node is added to or removed from the IEEE 1394 system, a bus reset of the whole system occurs, and a new node configuration is performed. This may be advantageous in providing the variableness in operation in such a manner so that no static root node exists as in USB or other networks, but the root node is changed according to the situation.

However, in the case in which the IEEE 1394 system is operated in association with home network appliances, the bus reset occurring in the whole system whenever the IEEE 1394 appliance is added to or removed from the system may cause a data loss at the nodes in which data transmission is performed.

Meanwhile, in order to solve the problem caused by the bus reset, there is a related technology where a root node and branch nodes are connected by the IEEE 1394 protocol and installed at home, and the connection of the corresponding nodes is performed using upper application layer of an LLC of IEEE 1394. However, this technology has limitations in that the system cannot be constructed by the IEEE 1394 protocol as a whole.

Accordingly, the present invention has been designed to solve the above and other problems occurring in the prior art and provides additional advantages.

It is the object of the present invention to provide a stable IEEE 1394 system and a node configuration method thereof that can prevent a bus reset of the whole system by providing a static root node in the IEEE 1394 system, intercepting a bus reset event by software, and performing a node ID allocation according to a node change as an operation between the root node and a specified node at which the node change occurs.

This object is solved by the subject matter of the independent claims.

Preferred embodiments are defined in the dependent claims.

In one embodiment, there is provided a home network system using an IEEE 1394 protocol, comprising a root node operating as a home gateway of the home network and having a static node ID that performs a bus management function with respect to the nodes of the home network system, and at least one node connected to the root node to form a tree structure, wherein if a node addition/removal occurs in the home network system, a node ID of an added/removed node is allocated from the root node through a bus reset between the added/removed node and a node physically connected to the added/removed node.

In another embodiment, there is provided a node configuration method in an IEEE 1394 home network system provided with a root node that has a static node ID and performs a bus management of the whole system. The method includes a first step of, if a specified bus reset event occurs in the home network system, performing a bus reset between a node in which the bus reset event occurs and an upper node directly connected to the node, a second step of, after performing the bus reset, updating configuration information stored at the upper node according to status information of the node at which the bus reset event occurs and transmitting corresponding information to the root node, a third step of the root node processing a node ID of the node at which the bus reset event occurs according to the transmitted information, and a fourth step of updating whole system node information according to the node ID processed at the third step and transmitting the updated node information to the whole nodes of the home network system.

The above features and advantages of the present invention will be more apparent from the following detailed description taken in conjunction with the accompanying drawings, in which:
FIGS. 1a and 1b are views illustrating an example of a node configuration according to a conventional IEEE 1394 protocol;
FIG. 2 is a flowchart illustrating a node configuration method of a conventional IEEE 1394 system;
FIG. 3 is a detailed flowchart illustrating a bus configuration process of the node configuration method in the conventional IEEE 1394 system;
FIG. 4 is a view illustrating the construction of an IEEE 1394 system to which a node configuration method is applied according to the present invention;
FIG. 5 is a flowchart illustrating a node configuration method in an IEEE 1394 system according to the present invention; and
FIG. 6 is a flowchart illustrating a node ID determining process in the node configuration method according to the present invention.

Embodiments of the present invention will be described in detail hereinafter with reference to the accompanying drawings. For the purposes of clarity and simplicity, a detailed description of known functions and configurations incorporated herein will be omitted as it may obscure the subject matter of the present invention.

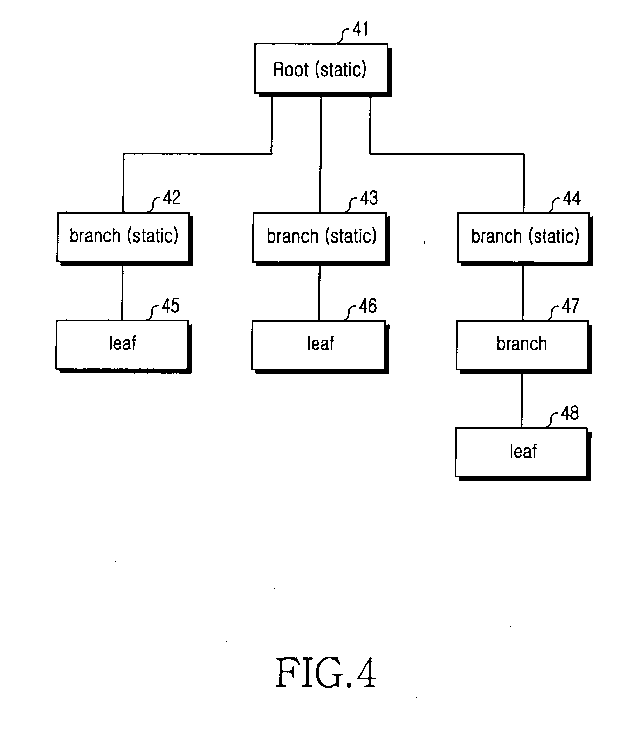

FIG. 4 is a view illustrating the construction of an IEEE 1394 system to which a node configuration method is applied in accordance with the present invention.

Referring to FIG. 4 which exemplifies a home network, a root node 41 serves as a home gateway in the home network system, and specified branch nodes 42, 43 and 44 have static node IDs and operate always using constant node IDs. Accordingly, it is not required to search for the root node through a bus reset and to reconfigure node IDs of the whole system as in the prior art. The network shown in FIG. 4 is small for purpose of illustration. In practice most networks would include a much larger number of branches and leaf devices.

The root node 41 and the branch nodes 42, 43 and 44 having the static node IDs generally serve as a backbone network of the home network system. Further, the branch nodes 42, 43 and 44 having the static node IDs are connected to leaf nodes 45 and 46, and a branch node 47 that is connected to another leaf node 48, respectively.

In the embodiment of the present invention, if the addition/removal of the IEEE 1394 device occurs at a lower node such as the leaf node 45, 46 or the branch node 47, a bus reset is not performed with respect to the whole system. However, the IEEE 1394 compliance system configures the node information according to the addition/removal of the device. Specifically, a bus reset is performed between the corresponding device and its upper node, the addition/removal information is recognized through the information exchange between the corresponding devices, the recognized information is transferred to the root node 41 having the static node ID to reconfigure the node information of the whole system, and the reconfigured node information is transferred to the nodes of the whole system to update the node information.

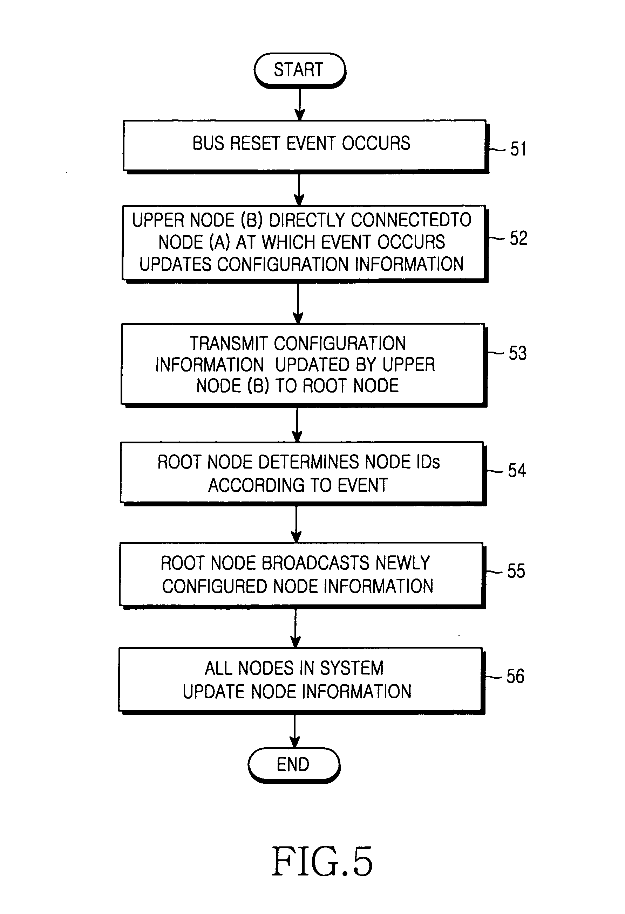

FIG. 5 is a flowchart illustrating the node configuration method in an IEEE 1394 system according to the present invention.

If a bus reset event that a new node is added to the leaf node 45, 46 or the existing leaf 48 is removed from the branch node 47 occurs (step 51), a control operation is performed so that the bus reset of the whole IEEE 1394 system, which may occur by hardware between the node at which the bus reset event occurs (i.e., the newly added node or the removed node), and its upper node directly connected to the newly added node or the removed node) does not occur. Instead, the configuration information of the newly added node or the removed node is grasped through the signal process on a physical (PHY) layer through a reset operation that is performed only between the newly added node or the removed node and its upper node, and the corresponding configuration information is updated by the upper node (step 52).

The signal process on the PHY layer for grasping the configuration information of the newly added node is performed in a manner that the PHY device of the upper node senses the change of the state of the new node (i.e., lower node) and receives self-ID information of the corresponding node from the new node. Also, the PHY device transfers the node configuration information of the whole system from the upper node to the newly added node.

Then, the configuration information updated by the upper node is transmitted to the root node (step 53).

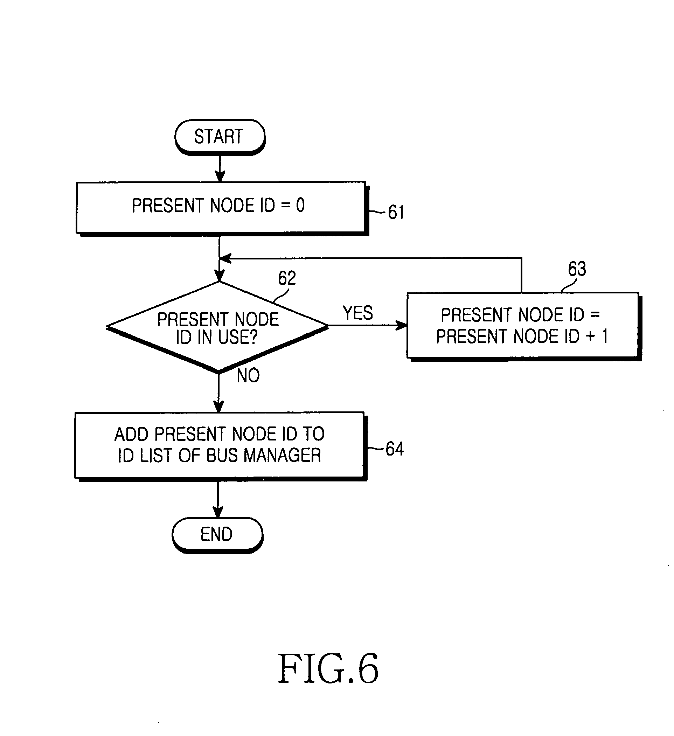

The root node receives the configuration information updated by the bus reset event, determines the node ID of the node newly added according to the bus reset event or deletes the node ID of the removed node (step 54). The node ID determining process for the added node will be explained in more detail later with reference to FIG. 6.

As described above, the root node manages the node IDs of the whole IEEE 1394 system by storing the node ID configuration information about the nodes in the whole IEEE 1394 system and adding/changing the node ID configuration information.

Additionally, the root node sends the node ID configuration information newly configured to the whole nodes through the 63^{rd} ID (i.e., a broadcast ID) of the IEEE 1394 system (step 55), so that all the nodes in the system update the newly configured node information (step 56).

FIG. 6 is a flowchart illustrating the node ID determining process in the node configuration method according to the present invention.

The root node receives the configuration information updated by the bus reset event and determines the node ID of the node added according to the bus reset event. For this, the root node set the present node ID as an initial value (step 61). In the embodiment of the present invention, it is set to "0".

Then, the root node confirms whether the present node ID is the node ID that is in use (step 62). That is, the root node confirms whether the present node ID is the node ID that has already been allocated to another node in the IEEE 1394 system.

If the present node ID is in use as a result of confirmation, the root node changes the present node ID value in a specified manner (step 63) and confirms whether the corresponding node ID value is in use (step 62). In the embodiment of the present invention, it is exemplified that the present node ID value is increased by "1".

Meanwhile, if the present node ID is not in use as a result of confirmation, the root node allocates the corresponding node ID value to the newly added node, and adds this node ID value to an ID list (i.e., a list of all node IDs of the whole system) of a bus manager in order to update the node ID configuration information of the nodes in the whole IEEE 1394 system that is stored in the root node (step 64).

More specifically, the root node which has received the news that a new node is added allocates a node ID to the newly added node to manage the newly added node. In this case, the allocated node ID must not overlap the node IDs already allocated to the existing nodes. Accordingly, in the embodiment of the present invention as illustrated in FIG. 6, the root node initially sets the present node ID to "0", confirms whether there is a node that uses the node ID of "0", and if a node that uses the corresponding node ID exists, increases the node ID value by "1" to confirm whether the node ID of "1" is in use. If a node that uses the corresponding node ID exist, it increases again the node ID value by "1", and confirms whether the node ID of "2" is in use, so that it can allocate the node ID that has not yet been used to the new node.

In the embodiment of the present invention, the root node of the IEEE 1394 system serves as a gateway at home and is implemented in the form of a wallplate at home, and the static branches are also implemented in the form of a wallplate at home. Accordingly, the system reset operation does not affect the respective static node IDs, and the only node IDs of the leaf or branch nodes connected to the static nodes are newly updated to operate the whole IEEE 1394 system accordingly. That is, in order to achieve a home network, the IEEE 1394 interface connected to the IEEE 1394 devices that include a user's AV system and so on is built in the form of a wallplate, and serves as a leaf node of the whole home network system.

As described above, according to the present invention, the bus reset of the whole IEEE 1394 system is prevented, and thus the IEEE 1394 that is favorable to multimedia can stably be used in implementing the home network system. Specifically, in comparison to the existing IEEE 1394 system that cannot avoid the bus reset occurrence when a new node is added or the existing node is removed and thus suffers from a data interruption when the isochronous data such as audio/video data is transmitted, the present invention performs a control operation so that the bus reset occurs locally without affecting the whole IEEE 1394 system, resulting in that a stable home network can be constructed. Furthermore, since the node IDs of other nodes are not changed even if a new node is added or the existing node is removed, the stability can be secured in processing the asynchronous data.

It should be noted that the method according to the present invention can be implemented by a program and stored in a recording medium (such as a CD ROM, RAM, floppy disk, hard disk, optomagnetic disk, etc.) in a computer-readable form.

While the present invention has been shown and described with reference to certain preferred embodiments thereof, it will be understood by those skilled in the art that various changes in form and details may be made therein without departing from the scope of the present invention as defined by the appended claims.

## Claims

1. A home network system using an IEEE 1394 protocol, comprising:
a root node operating as a home gateway of the home network and having a static node ID that performs a bus management function of the home network system; and
at least one node coupled to the root node to form a tree structure;
wherein if a node addition/removal occurs in the home network system, a node ID of an added/removed node is allocated from the root node through a bus reset between the added/removed node and a node physically connected to the added/removed node.

2. The home network system as claimed in claim 1, wherein the root node receives information about the added/removed node from the node physically connected to the added/removed node, processes the node ID of the added/removed node, and then broadcasts changed node configuration information of the whole system over the whole nodes in the home network system.

3. The home network system as claimed in claim 1 or 2, wherein, if an addition of a new node occurs in the home network system, the node physically connected to the new node performs a bus reset with respect to the new node, receives status information of the new node and transmits information of the whole node structure of the home network system to the new node, and then transfers information about the new node to the root node.

4. The home network system as claimed in claim 3, wherein the node physically connected to the new node stores the status information of the new node through a physical register coupled to a port that is connected when the new node is added, and transfers information relating to the addition of the new node to the root node without broadcasting a reset signal generated according to the addition of the new node over the whole nodes.

5. The home network system as claimed in one of claims 1 to 4, wherein, if the addition of the new node occurs in the home network system, the root node, in order to allocate a node ID to the new node, searches for a node ID value that is not in use in the home network system.

6. The home network system as claimed in one of claims 1 to 5, wherein, if the removal of the existing node occurs in the home network system, the bus reset of the whole nodes of the home network system does not occur, but only the bus reset between the removed node and its upper node physically connected to the removed node occurs, and the upper node physically connected to the removed node transfers information about the removed node to the root node so that the root node deletes the node ID of the removed node to change the node configuration information.

7. The home network system as claimed in claim 6, wherein the upper node physically connected to the removed node senses and stores status change information of the removed node, and transfers information for reporting the removal of the node to the root node without broadcasting a reset signal generated according to the removal of the node over the whole nodes.

8. A node configuration method in an IEEE 1394 home network system provided with a root node that has a static node ID and performs a bus management of the whole system, the method comprising:
a first step of, if a specified bus reset event occurs in the home network system, performing a bus reset between a node in which the bus reset event occurs and an upper node directly connected to the node;
a second step of, after performing the bus reset, updating configuration information stored in the upper node according to status information of the node at which the bus reset event occurs and transmitting corresponding information to the root node;
a third step of the root node processing a node ID of the node at which the bus reset event occurs according to the transmitted information; and
a fourth step of updating whole system node information according to the node ID processed at the third step and transmitting the updated node information to the whole nodes of the home network system.

9. The method as claimed in claim 8, wherein the specified bus reset event occurs if a new node is added to the home network system.

10. The method as claimed in claim 9, wherein in the first step, a reset signal generated according to the addition of the new node is not broadcast over the whole nodes, but is generated only between the upper node and the new node.

11. The method as claimed in claim 9 or 10, wherein the second step, if the new node is added after the bus reset is performed, stores the status information of the new node through a physical register connected to a port connected to the new node, and transfers information that reports the addition of the new node to the root node.

12. The method as claimed in one of claims 9 to 11, wherein at the third step, the root node searches for a node ID value that is not in use in the home network system by changing the node ID value at predetermined intervals from a specified value, and gives the searched node ID value as the node ID of the new node.

13. The method as claimed in claim 8, wherein the specified bus reset event occurs if the existing node attached to the home network system is removed.

14. The method as claimed in claim 13, wherein at the first step, a reset signal generated according to the removal of the existing node is not broadcast over the whole nodes in the home network system, but is generated only between the upper node and the new node.

15. The method as claimed in claim 13 or 14, wherein the second step, if the existing node is removed after the bus reset is performed, senses a status change of the node through a port connected to the removed node, and transfers information that reports the removal of the existing node to the root node.

16. The method as claimed in one of claims 13 to 15, wherein in the third step, the root node deletes the node ID of the removed node.
